# EUROPEAN PATENT APPLICATION

(11) **EP 3 809 773 A1**
(43) Date of publication of application: **21.04.2021**
(21) Application number: 18922202.9
(22) Date of filing: 12.06.2018
(51) Int. Cl.: H04W 72/04, H04L 27/26

(54) **USER TERMINAL**

(71) Applicant: NTT DOCOMO, INC., Chiyoda-ku, Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2018/022476
(87) International publication number: WO 2019/239503

(57) **Abstract**

In order to properly perform communication even in a case of performing communication by using a plurality of transmission points, an aspect of a user terminal of the present disclosure includes: a receiving section that receives one or more downlink control information used for scheduling of downlink shared channels to be transmitted from a plurality of transmission points by monitoring a downlink control channel; and a control section that determines the number of downlink control information to be transmitted in a given duration based on information included in the received downlink control information.

## Description

### Technical Field

The present disclosure relates to a user terminal in a next-generation mobile communication system.

### Background Art

In the universal mobile telecommunications system (UMTS) network, the specifications of a long-term evolution (LTE) have been drafted for the purpose of further increasing a data rate, providing low latency, and the like (see Non Patent Literature 1). In addition, for the purpose of further widening the bandwidth and increasing the speed from the LTE (also referred to as LTE Rel. 8 or 9), the LTE advanced (LTE-A, also referred to as LTE Rel. 10, 11, or 12) has been specified, and the LTE succeeding system (for example, referred to as a future radio access (FRA), a 5th generation mobile communication system (5G), a new radio (NR), a new radio access (NX), a future generation radio access (FX), or an LTE Rel. 13, 14, or 15 or later) is also being studied.

In the existing LTE system (for example, LTE Rel. 8 to 13), a user terminal (user equipment (UE)) controls reception of a downlink shared channel (for example, physical downlink shared channel (PDSCH)) based on downlink control information (DCI, also referred to as DL assignment, etc.) from a radio base station. Also, the user terminal controls transmission of an uplink shared channel (for example, physical uplink shared channel (PUSCH)) based on DCI (also referred to as UL grant, etc.).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (for example, NR, 5G, 5G+, or Rel. 16 or later), communication using beam forming (BF) has been under study. In order to improve the quality of the communication using BF, a control of at least one of signal transmission or signal reception in consideration of a quasi-co-location (QCL) relationship (QCL relationship) between multiple signals has been under study.

Further, in future radio communication systems, it is assumed that DL signals (for example, PDSCH) that are non-coherent (non-coherent transmission) are jointly transmitted from a plurality of transmission points. In this case, it may be possible to control scheduling of PDSCHs to be transmitted from a plurality of transmission points using one or more downlink control information (or physical downlink control channel (PDCCH)).

However, when the scheduling of PDSCHs to be transmitted from a plurality of transmission points is controlled using one or more DCI, how to control processing of receiving the DCI becomes a problem. For example, the UE needs to monitor (or detect) a downlink control channel used for transmission of the DCI in order to receive the DCI, but specific processing therefor has not been sufficiently studied. In a case where processing of receiving the downlink control information or the downlink control channel is not properly performed, the quality of communication using a plurality of transmission points may deteriorate.

The present disclosure has been made in view of the above, and an object of the present disclosure is to provide a user terminal which enables proper communication even in a case where communication is performed using a plurality of transmission points.

### Solution to Problem

A user terminal according to an aspect of the present disclosure includes: a receiving section that receives one or more downlink control information used for scheduling of downlink shared channels to be transmitted from a plurality of transmission points by monitoring a downlink control channel; and a control section that determines the number of downlink control information to be transmitted in a given duration based on information included in the received downlink control information.

### Advantageous Effects of Invention

According to an aspect of the present disclosure, it is possible to properly perform communication even in a case where communication is performed using a plurality of transmission points.

### Brief Description of Drawings

Fig. 1A and Fig. 1B are diagrams illustrating an example of a case where physical downlink shared channels (PDSCHs) are transmitted from a plurality of transmission points.
Fig. 2 is a diagram illustrating an example of a physical downlink control channel (PDCCH) configuration reported to a UE.
Fig. 3 is a diagram illustrating an example of association between a search space and PDSCH-related information.
Fig. 4 is a diagram illustrating an example of association between a control resource set and PDSCH-related information.
Fig. 5 is a diagram illustrating an example of a case of configuring a PDCCH configuration for each DCI.
Fig. 6 is a diagram illustrating an example of association between a search space and PDSCH-related information.
Fig. 7 is a diagram illustrating an example of a control of PDSCH and DCI transmission from the plurality of transmission points in each slot.
Fig. 8A and Fig. 8B are diagrams for describing a field of each of DCI transmitted from the plurality of transmission points to the UE.
Fig. 9 is a diagram illustrating an example of a field of each DCI.
Fig. 10 is a diagram illustrating an example of a DCI field including the total number of DCI and a count value.
Fig. 11 is a diagram illustrating a schematic structure of a radio communication system according to the present embodiment.
Fig. 12 is a diagram illustrating an example of an overall structure of a radio base station according to the present embodiment.
Fig. 13 is a diagram illustrating an example of a functional structure of the radio base station according to the present embodiment.
Fig. 14 is a diagram illustrating an example of an overall structure of a user terminal according to the present embodiment.
Fig. 15 is a diagram illustrating an example of a functional structure of the user terminal according to the present embodiment.
Fig. 16 is a diagram illustrating an example of a hardware structure of the radio base station and the user terminal according to the present embodiment.

### Description of Embodiments

In future radio communication systems (for example, Rel. 16 or later), a study is underway to perform non-coherent downlink (DL) (for example, physical downlink shared channel (PDSCH)) transmission from each of a plurality of transmission points. The joint transmission of non-coherent DL signals (or DL channels) from a plurality of transmission points may be referred to as non-coherent joint transmission (NCJT). Further, in the present specification, the transmission point may be read as a transmission/reception point (TRP), a panel, or a cell.

It is also assumed that scheduling of non-coherent PDSCHs to be transmitted from a plurality of transmission points, respectively, is controlled using one or more downlink control information (DCI). As an example, at least one of a plurality of downlink control channels (for example, physical downlink control channel (PDCCH)) or DCI is used to schedule PDSCHs to be transmitted from a plurality of transmission points.

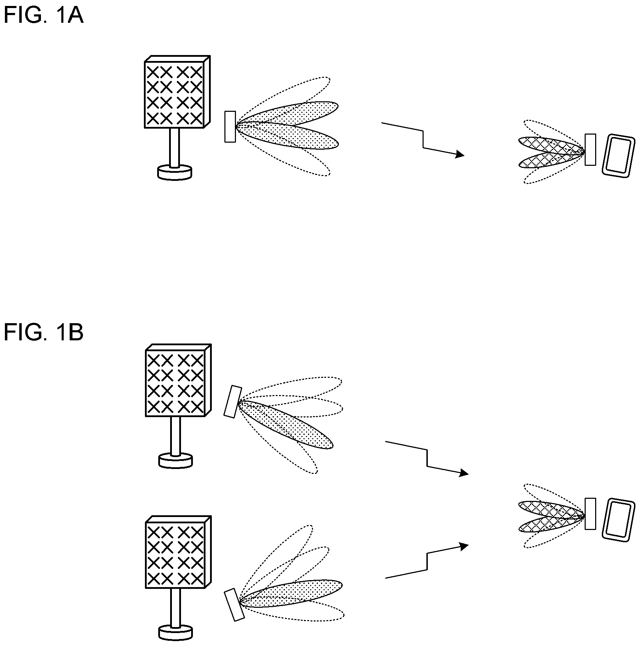

Fig. 1A illustrates a case where PDSCHs (for example, PDSCHs using the NCJT) are transmitted from a plurality of panels to a UE, and Fig. 1B illustrates a case where PDSCHs (for example, PDSCHs using the NCJT) are transmitted from a plurality of transmission/reception points (TRPs) to the UE.

In this case, it may be possible to separately configure DCI for scheduling of a PDSCH to be transmitted from each transmission point (for example, panel or TRP). For example, first DCI #A for scheduling a PDSCH to be transmitted from a transmission point #A and second DCI #B for scheduling a PDSCH to be transmitted from a transmission point #B may be transmitted to the UE.

As described above, in a case where a PDSCH is transmitted from each of a plurality of transmission points, how to control monitoring of DCI or PDCCH corresponding to each PDSCH becomes a problem. For example, how to control a UE operation when monitoring a plurality of PDCCHs becomes a problem.

As one aspect of the present disclosure, the present inventors have come up with the idea of configuring information related to a PDCCH and information related to a PDSCH transmitted from each transmission point in association with each other based on the idea that a PDCCH configuration configured in the UE includes information regarding a control resource set and a search space.

Alternatively, as another aspect of the present disclosure, the present inventors have come up with the idea of reporting, to the UE, information regarding the number of DCI to be transmitted from a plurality of transmission points in a given duration, the information being included in given DCI.

Now, the present embodiment will be described below in detail with reference to the drawings. Note that a transmission point described below may be read as at least one of a panel or a transmission/reception point.

### (First Aspect)

In a first aspect, information related to a PDCCH and information related to a PDSCH transmitted from each transmission point are configured in association with each other.

The PDCCH-related information may be at least one of a PDCCH configuration (PDCCH-Config), a search space, or a control resource set (CORESET). The PDSCH-related information may be information (index indication) regarding at least one of a PDSCH, a codeword, a demodulation reference signal (DMRS) port group, or a transmission point, the information being used to receive a PDSCH from each transmission point. The PDSCH-related information may also be referred to as information related to each transmission point.

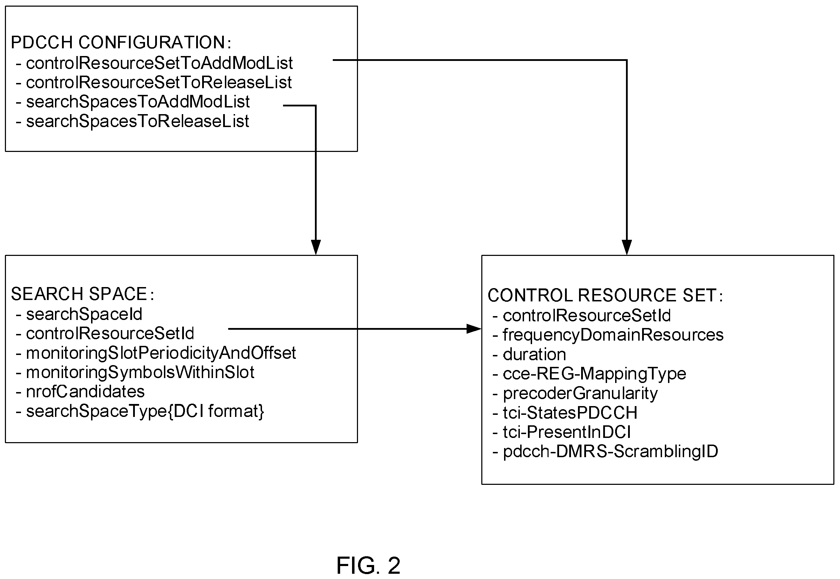

The PDCCH configuration includes information (for example, a control resource set ID) regarding a control resource set, and information (for example, a search space set ID) regarding a search space set, and is reported to the UE in a higher layer (for example, RRC signaling) (see Fig. 2). The PDCCH configuration configured in the higher layer is used to configure UE-specific PDCCH parameters such as a control resource set, a search space, and an additional parameter for the UE to acquire the PDCCH. The PDCCH configuration configured in the higher layer may be referred to as an information element (PDCCH-Config IE) for the PDCCH configuration.

A base station may report each of the information regarding the search space and the information regarding the control resource set to the UE in the higher layer. The information regarding the search space reported in the higher layer may be referred to as an information element (IE SearchSpace) for the search space set. The information regarding the control resource set reported in the higher layer may be referred to as an information element (IE ControlResourceSet) for the control resource set.

The information element for the search space set configures how or where to search for PDCCH candidates, in the UE. Further, each search space is associated with one control resource set.

Examples of the information element for the search space set include a search space set ID (searchSpaceId), a control resource set ID (controlResourceSetId), a monitoring slot periodicity and offset (monitoringSlotPeriodicityAndOffset), monitoring symbols within a slot (monitoringSymbolsWithinSlot), the number of candidates per aggregation level (nrofCandidates), and a search space type (searchSpaceType) indicating whether or not the search space is a common search space or a UE-specific search space.

The information element for the control resource set configures a time/frequency of the control resource set for searching the DCI, in the UE. Examples of the information element for the control resource set include a control resource set ID (controlResourceSetId), frequency domain resources (frequencyDomainResouces), a duration indicating a time domain (duration), a mapping type of a control channel element (CCE) to a resource element group (REG) (cce-REG-MappingType), precoder granularity in frequency domain (precoderGranularity), a PDCCH TCI state (tci-StatesPDCCH), the presence or absence of a TCI field in DCI (tci-PresentInDCI), and a PDCCH DMRS scrambling ID (pdcch-DMRS-ScramblingID).

The base station configures information regarding the maximum number (for example, N) of DCI that can be simultaneously received by the UE in the UE by using a higher layer (for example, RRC signaling), the DCI being transmitted from a plurality of transmission points. The UE performs reception processing assuming that the number of DCI (for example, DCI to be actually transmitted) to be transmitted to the UE in a given duration (for example, a slot, a given symbol duration, or a subframe) is N or less, based on information reported from the base station. For example, in a case where the UE detects N DCI in a given duration, the UE may perform a control to stop the subsequent DCI reception processing. As a result, the load of the reception processing can be reduced.

The base station configures, in the UE, association (or correspondence) between the PDCCH-related information (for example, at least one of the PDCCH configuration, the search space, or the control resource set) and the PDSCH-related information in a higher layer or the like. The PDSCH-related information may be information regarding an index of at least one of a PDSCH, a codeword, a DMRS port group, or a transmission point, the information being used for receiving a PDSCH from each transmission point.

The UE receives DCI by performing PDCCH monitoring for at least one of a given PDCCH configuration, search space, or control resource set based on association information reported from the base station. As a result, the UE can perform reception processing by determining a PDSCH to be transmitted from each transmission point and at least one of a PDCCH configuration, a search space, or a control resource set for transmission DCI for scheduling of the PDSCH.

Further, the UE may assume that the maximum number (M) of transmission points from which PDSCHs are to be transmitted in a given duration is N or more (N ≤ M).

The base station may configure at least one of the search space ID or the control resource set ID to be unique for a plurality of DCI transmitted from a plurality of transmission points.

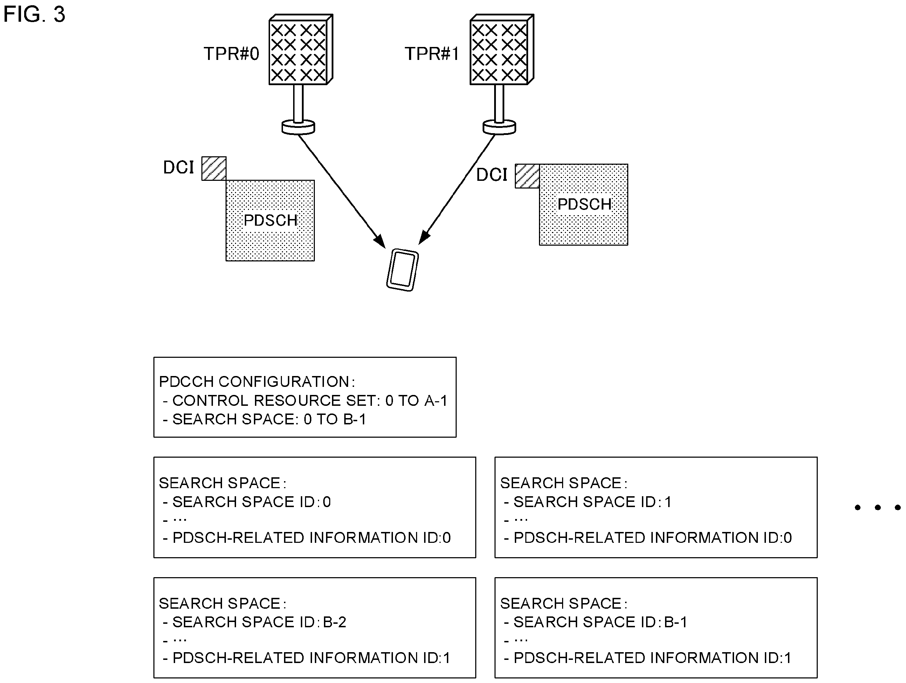

Fig. 3 illustrates an example of a case where a unique search space ID is configured for a plurality of DCI transmitted from a plurality of transmission points. Fig. 3 illustrates, as an example, a case where the number of transmission points from which PDSCHs are transmitted is 2 (M = 2). In this case, a search space configuration and PDSCH-related information corresponding to a given transmission point are associated with each other. Specifically, PDSCH-related information (#0 or #1) corresponding to any transmission point is associated with each search space ID.

Fig. 3 illustrates a case where PDSCH-related information #0 transmitted from a transmission point #0 is associated with each of search space IDs #0, #1, and the like. Further, Fig. 3 illustrates a case where PDSCH-related information #1 transmitted from a transmission point #0 is associated with each of search space IDs #B-2, #B-1, and the like.

When the UE detects DCI in the search space IDs #0, #1, and the like, the UE determines that the PDSCH is transmitted from the transmission point #0. On the other hand, when the UE detects DCI in the search space IDs #B-2, #B-1, and the like, the UE determines that the PDSCH is transmitted from the transmission point #1.

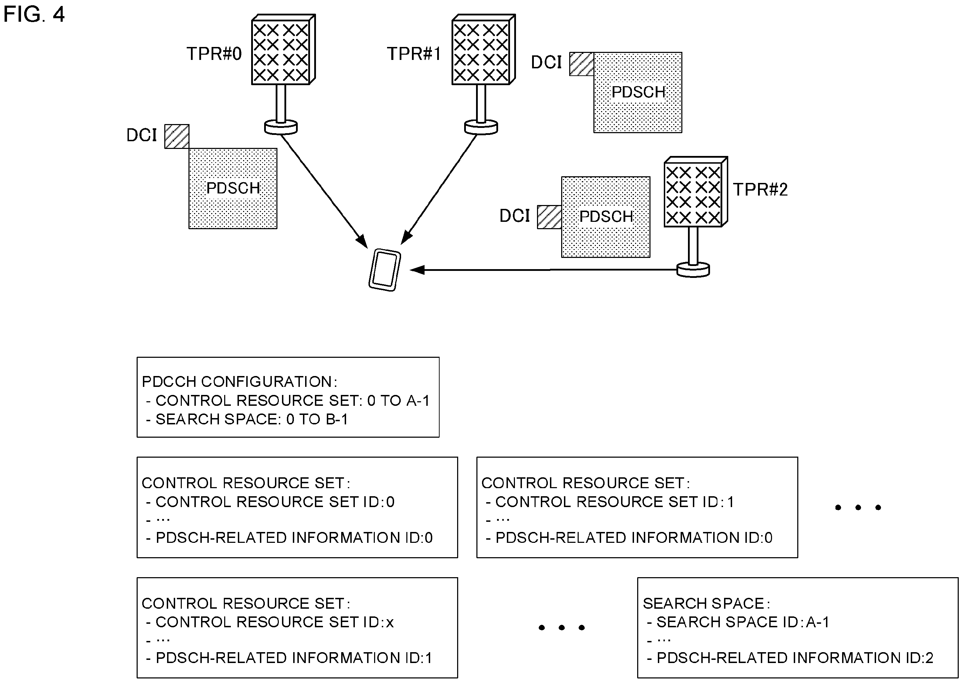

Fig. 4 illustrates an example of a case where a unique control resource set ID is configured for a plurality of DCI transmitted from a plurality of transmission points. Fig. 4 illustrates, as an example, a case where the number of transmission points from which PDSCHs are transmitted is 3 (M = 3). In this case, a control resource set configuration and PDSCH-related information corresponding to a given transmission point are associated with each other. Specifically, PDSCH-related information (#0, #1, or #2) corresponding to any transmission point is associated with each control resource set ID.

Fig. 4 illustrates a case where the PDSCH-related information #0 transmitted from the transmission point #0 is associated with each of control resource set IDs #0, #1, and the like. Further, Fig. 4 illustrates a case where the PDSCH-related information #1 transmitted from the transmission point #1 is associated with a control resource set ID #x and the like. Further, Fig. 4 illustrates a case where PDSCH-related information #2 transmitted from a transmission point #2 is associated with a control resource set ID #A-1 and the like.

When the UE detects DCI in the control resource set IDs #0, #1, and the like, the UE determines that the PDSCH is transmitted from the transmission point #0. When the UE detects DCI in the control resource set ID #x and the like, the UE determines that the PDSCH is transmitted from the transmission point #1. When the UE detects DCI in the control resource set ID #A-1 and the like, the UE determines that the PDSCH is transmitted from the transmission point #2.

Alternatively, the base station may configure at least one of the search space ID or the control resource set ID to be unique for DCI transmitted from one transmission point. In this case, IDs may be configured separately over a plurality of transmission points. For example, the search space and the control resource set may be configured in association with a corresponding PDCCH configuration ID (for example, the PDSCH-related information and the PDCCH configuration are associated with each other).

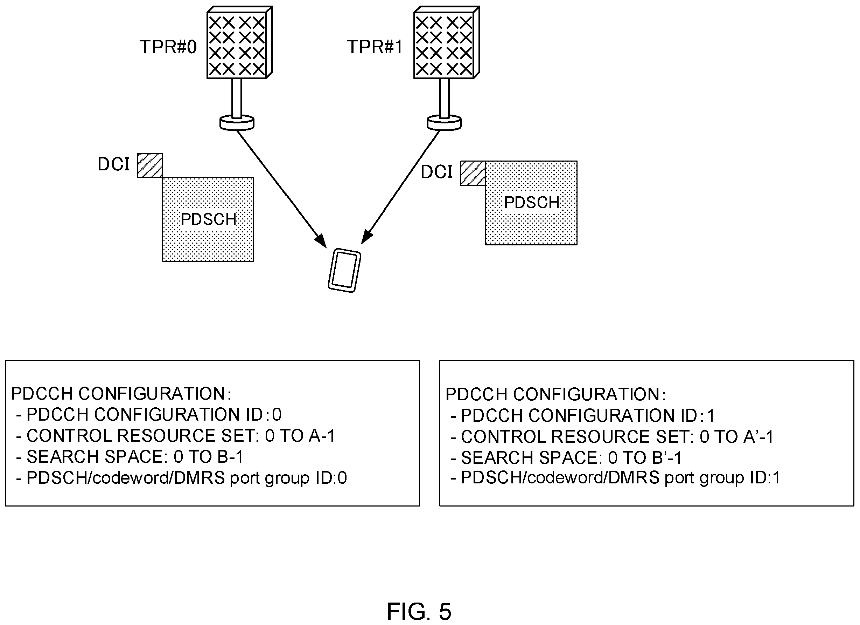

Fig. 5 illustrates an example of a case where a unique search space ID and a unique control resource set ID are configured for DCI transmitted from one transmission point. Fig. 5 illustrates, as an example, a case where the number of transmission points from which PDSCHs are transmitted is 2 (M = 2). In this case, a PDCCH configuration including a given search space ID and control resource set ID is associated with PDSCH-related information corresponding to a given transmission point. Specifically, PDSCH-related information (#0 or #1) corresponding to any transmission point is associated with each PDCCH configuration ID.

Fig. 5 illustrates a case where the PDSCH-related information #0 transmitted from the transmission point #0 is associated with a PDCCH configuration ID #0 including control resource set IDs #0 to #A-1 and search space IDs #0 to #B-1. Further, Fig. 5 illustrates a case where the PDSCH-related information #0 transmitted from the transmission point #1 is associated with a PDCCH configuration ID #1 including control resource set IDs #0 to #A'-1 and search space IDs #0 to #B'-1.

When the UE detects DCI in the PDCCH configuration ID #0, the UE determines that the PDSCH is transmitted from the transmission point #0. When the UE detects DCI in the PDCCH configuration ID #1, the UE determines that the PDSCH is transmitted from the transmission point #1. In this way, by associating the PDCCH configuration with each DCI transmitted from each transmission point, the UE can control the detection of DCI based on the PDCCH configuration ID.

### <When Maximum Number N of DCI is Not Configured>

The UE may assume that the maximum number (N) of DCI is a given value when information regarding the maximum number (N) of DCI that can be transmitted in a given duration is not reported. For example, the UE controls the reception processing assuming N = 1 when N is not configured in a higher layer. Alternatively, the UE may assume that the maximum number (N) of DCI is equal to the configured number (M) of transmission points.

In this way, when the maximum number (N) of DCI that can be transmitted in a given duration is not configured in a higher layer, the reception processing is performed assuming that the maximum number (N) of DCI is a given value, such that it is possible to suppress an unnecessary increase in the number of times of decoding.

### <Aggregation Level>

A plurality of types of aggregation levels (AL) are specified in the search space. The AL corresponds to the number of resource units (for example, control channel elements (CCE)) constituting the DCI. The AL may be referred to as a CCE aggregation level. In addition, the search space includes a plurality of PDCCH candidates for a certain AL. For example, a given PDCCH candidate may be configured corresponding to each of ALs (1, 2, 4, 8, and 16) .

In a case where the maximum number (N) of DCI configured in a higher layer is larger than 1 (N > 1), the UE may assume that a plurality of DCI (CCEs constituting each DCI) have the same aggregation level. The base station may apply the same aggregation level to a plurality of DCI transmitted to the UE. As a result, it is possible to decrease the AL monitored by the user terminal, and thus it is possible to reduce the reception processing of the UE or the number of times of decoding.

Since DCI corresponding to different aggregation levels have different error probabilities, max coupling loss (MCL) is specified by DCI having the lowest aggregation level. By configuring a plurality of DCI to have the same aggregation level, it is possible to report a plurality of DCI with the same MCL.

Alternatively, the aggregation level to be applied may be limited for a plurality of DCI. For example, the UE may perform the reception processing under the assumption that the aggregation level of one DCI is X and the aggregation level of another DCI is X or less (or less than X). In a case where the aggregation level is high, the number of CCEs is large. Therefore, when the aggregation levels of a plurality of DCI are increased, problems such as blocking occur. Therefore, it is possible to reduce the occurrence of blocking by increasing the aggregation levels of some of the plurality of DCI.

### (Second Aspect)

In a second aspect, the base station indicates or activates PDCCH-related information corresponding to a transmission point for which the UE performs monitoring of DCI.

For example, the base station reports or activates, by using a given DL signal (for example, MAC control information (MAC CE)), at least one of a PDCCH configuration, a search space, or a control resource set for a transmission point for which the UE needs to perform monitoring of DCI.

The number of transmission points (or the number of DCI configurations) configured in the UE may exceed the maximum number (N) of DCI that can be simultaneously received by the UE in a given duration. In this case, by indicating or activating a target to be monitored to the UE, even when N or more transmission points are configured, the UE can properly monitor DCI from maximum N transmission points.

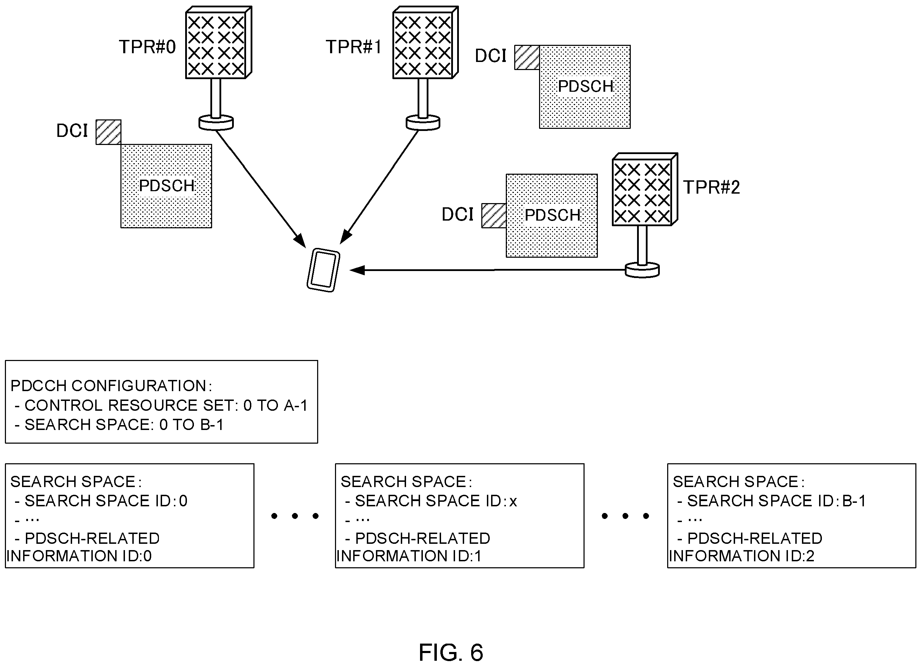

Fig. 6 illustrates an example of a case where the base station reports information regarding DCI to be monitored to the UE. The information regarding DCI to be monitored, which is reported from the base station to the UE, may be at least one of a given PDCCH configuration, search space, or control resource set. Alternatively, the information regarding DCI to be monitored, which is reported from the base station to the UE, may be at least one of information specifying a transmission point or PDSCH-related information.

Fig. 6 illustrates, as an example, a case where the number of transmission points from which PDSCHs are transmitted is 3 (M = 3). For example, the base station configures a PDCCH configuration for the transmission points #0, #1, and #2 by using a higher layer or the like. Here, it is assumed that the base station reports that the maximum number (N) of DCI that can be received by the UE in a given duration is 2.

In Fig. 6, a PDCCH configuration including control resource set IDs #0 to #A-1 and search space IDs #0 to #B-1 is configured for the UE. Further, the PDSCH-related information #0 transmitted from the transmission point #0 is associated with the search space ID #0 and the like. Further, the PDSCH-related information #1 transmitted from the transmission point #1 is associated with a search space ID #x and the like. The PDSCH-related information #2 transmitted from the transmission point #2 is associated with the search space ID #B-1 and the like.

The base station indicates or activates at least one (here, a search space ID) of a PDCCH configuration, a search space, or a control resource set by using an MAC CE so that the UE monitors up to N (here, two) DCI.

For example, the base station reports any one of a search space ID corresponding to at least one of the transmission points #0 and #1, a search space ID corresponding to at least one of the transmission points #1 and #2, or a search space ID corresponding to at least one of the transmission points #0 and #2. The search space ID corresponding to at least one of the transmission points #0 and #1 may be any one of a search space ID corresponding to only the transmission point #0, a search space ID corresponding to only the transmission point #1, or a search space ID corresponding to both the transmission points #0 and #1.

As a result, even in a case where transmission points of which the number is larger than the maximum number (N) of DCI that can be simultaneously received by the UE are configured, the load of the reception processing can be suppressed by monitoring the PDCCH configuration or the like specified in advance.

Alternatively, the base station indicates or activates at least one of a PDCCH configuration, a search space, or a control resource set by using an MAC CE so that the UE monitors less than N (here, one) DCI. For example, the base station reports any one of PDCCH-related information corresponding to the transmission point #0, PDCCH-related information corresponding to the transmission point #1, or PDCCH-related information corresponding to the transmission point #2.

As such, the UE performs DCI reception processing based on at least one of a PDCCH configuration, a search space, or a control resource set indicated or activated by the base station, thereby making it possible to reduce the load of the reception processing of the UE.

### (Third Aspect)

In a third aspect, DCI reception processing (for example, the number of DCI to be decoded) in the UE is controlled based on information reported from the base station.

The base station configures the maximum number (N) of DCI simultaneously (or in a given duration) received by the UE for a plurality of transmission points by using at least one of a higher layer or an MAC CE. For example, when N>1, the UE needs to continue DCI decoding processing in a search space or control resource set until N DCI are received simultaneously (or in a given duration).

On the other hand, in some communication situations, the number of DCI transmitted in a certain duration is not always N, and the number of DCI actually transmitted may be less than N. In such a case, when the UE performs the reception processing under the assumption that N DCI are transmitted in each duration, the load of the reception processing may increase.

Therefore, in the third aspect, information regarding DCI to be actually transmitted in a given duration is reported to the UE.

### <Reporting of Number of DCI>

The base station may explicitly or implicitly report, to the UE, information regarding the number of DCI to be actually transmitted in a given duration. For example, information regarding the number of DCI is reported to the UE by using a given field included in given DCI (or DCI format).

As an example, the number of DCI is reported to the UE by using a given 1-bit field. In this case, when a bit value is "0", the number of transmitted DCI may be one, and when a bit value is "1", the number of transmitted DCI may be N (for example, two).

The UE can determine the number of DCI to be actually transmitted simultaneously (or in a given duration) based on a given field included in received DCI (for example, the first received DCI). In addition, the UE can determine whether or not the UE has failed to detect another DCI based on a given field of DCI.

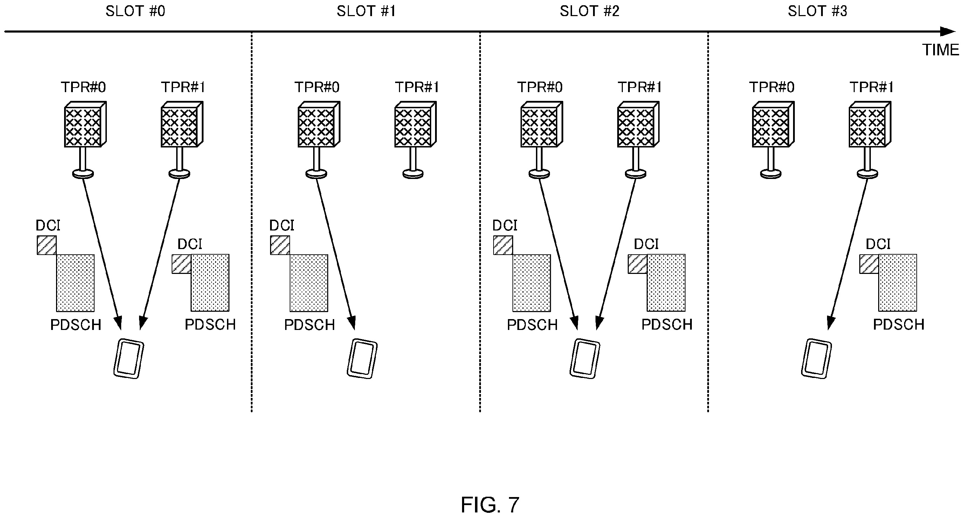

Fig. 7 illustrates an example of a case where the number of DCI to be transmitted from a plurality of transmission points in each given duration (here, a slot) is reported to the UE. In slots #0 and #2, DCI (two DCI in total) are transmitted from the transmission points #0 and #1, and thus the base station reports, to the UE, a bit value of a given field of the DCI as "1".

In slot #1, DCI (for example, one DCI) is transmitted from the transmission point #0, and thus the base station reports, to the UE, a bit value of a given field of the DCI as "0". In slot #3, DCI (for example, one DCI) is transmitted from the transmission point #1, and thus the base station reports, to the UE, a bit value of a given field of the DCI as "0". Note that in a case where a plurality of (for example, two) DCI are transmitted from one transmission point, the base station reports, to the UE, a bit value of a given field of the DCI as "1".

### <Reporting of Transmission Point of DCI>

The base station reports, to the UE, at least one of a transmission point of DCI to be actually transmitted in a given duration, a PDSCH corresponding to the DCI to be actually transmitted, a codeword, a DMRS port group, or a PDCCH configuration ID by using a given field included in a given DCI (or DCI format).

As an example, information regarding a transmission point (or a corresponding PDSCH or the like) from which DCI is to be transmitted is reported to the UE by using a given 2-bit field. In this case, DCI (for example, one DCI) may be transmitted from the transmission point #0 when the bit value is "00", DCI (for example, one DCI) may be transmitted from the transmission point #1 when the bit value is "01", and DCI (for example, two DCI) may be transmitted from the transmission points #0 and #1 that perform the NCJT, when the bit value is "10".

For example, in Fig. 7, in the slots #0 and #2, DCI for scheduling a PDSCH of the NCJT is transmitted from each of the transmission points #0 and #1, and thus the base station reports, to the UE, a bit value of a given field of the DCI as "10". In slot #1, DCI is transmitted from the transmission point #0, and thus the base station reports, to the UE, a bit value of a given field of the DCI as "00". In slot #3, DCI is transmitted from the transmission point #1, and thus the base station reports, to the UE, a bit value of a given field of the DCI as "01".

Note that the given field included in the DCI may be a field configured to report the number of DCI, a transmission point of DCI, or the like, or may be a field for other use. The field for other use may be at least one of a field used to report rate matching (RM) or a field used to report quasi-co-location (QCL).

### (Fourth Aspect)

In a fourth aspect, a case where given UE capability information (UE capability) is configured in communication using a plurality of transmission points will be described.

For example, the following UE capability information may be configured in communication using a plurality of transmission points. The following UE capability information may be configured for each UE or may be configured for each transmission point.

(1) Maximum number of PDCCH configurations (PDCCH-Config)
(2) Maximum number of search space configurations
(3) Maximum number of control resource set configurations
(4) Maximum number of PDCCH blind detection capabilities

Note that the UE capability information (1)-(4) may be defined as the same value or different values for each transmission point.

In communication using a plurality of transmission points, when the maximum number of search space configurations for each UE is P, B in Figs. 3, 4, and 6 may be P or less (B ≤ P), and B + B' in Fig. 5 may be P or less (B ≤ P) .

In communication using a plurality of transmission points, when the maximum number of search space configurations for each transmission point is P, the search space configuration associated with PDSCH indication in Figs. 3, 4, and 6 may be P or less (or less than P). For example, B/2 ≤ P in Fig. 3, and B ≤ P and B' ≤ P in Fig. 6.

### (Fifth Aspect)

In a fifth aspect, whether or not a plurality of DCI are configured in a given duration (whether or not a plurality of DCI are configured) is reported to the UE by using DCI.

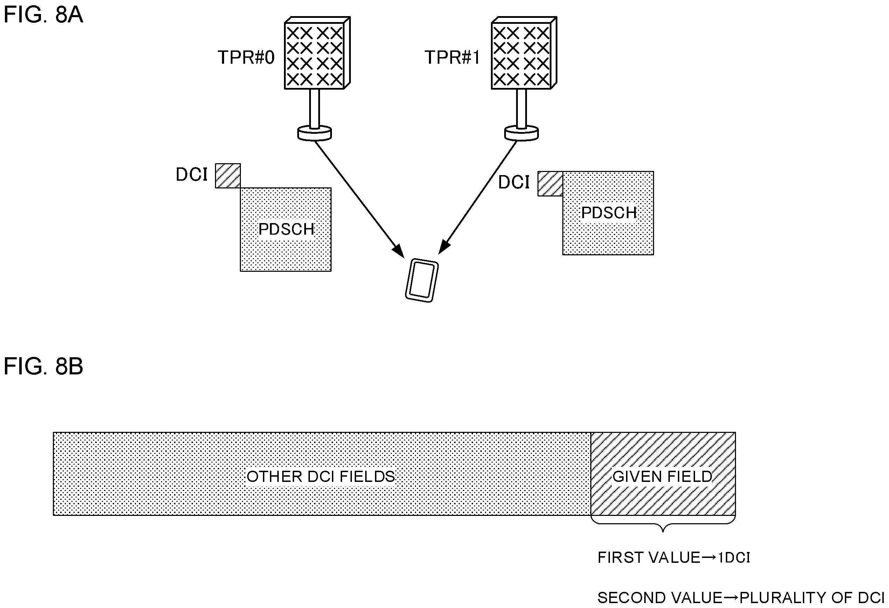

When performing communication with a plurality of transmission points, the UE may determine whether or not a plurality of DCI are to be transmitted in a given duration, or determine the number of DCI to be transmitted, based on received DCI (see Fig. 8). Fig. 8A illustrates a case where the UE receives DCI for scheduling of a PDSCH to be transmitted from each of the transmission points #0 and #1. Fig. 8B illustrates an example of a field included in DCI.

For example, when a given field included in DCI has a first value, the UE determines that the number of DCI to be transmitted to the UE is one. In this case, the UE may perform a control to stop DCI detection when detecting one DCI in a given duration.

On the other hand, when the given field included in the DCI has a second value (for example, other than the first value), the UE may determine that a plurality of DCI are to be transmitted. Note that the given field may be included only in a given DCI or may be included in each DCI. Alternatively, even in a case where the given field is included in each DCI, the UE may determine the number of DCI to be transmitted based on the given field included in the given DCI.

The number of bits of the given field included in the DCI may be one or may be larger than one (for example, y bits (y > 1)). Hereinafter, an example of information reported to the UE in a case where the number of bits of the given field is one and a case where the number of bits of the given field is y will be described.

### <For One Bit>

The UE may determine, based on a bit value of the given field included in the given DCI, whether the number of DCI to be transmitted to the UE in a given duration (for example, a slot) is one or plural. For example, when the bit value of the given field is the first value (for example, "0"), the UE determines that only one DCI (for example, the given DCI) is to be transmitted to the UE. In this case, the UE may perform a control so as not to perform an operation (for example, decoding processing) for receiving other DCI.

When the bit value of the given field is the second value (for example, "1"), the UE determines that a plurality of DCI (for example, DCI other than the given DCI) are to be transmitted to the UE. In this case, the UE may control the reception processing by assuming the maximum number (N) of DCI reported from the base station.

Note that the given DCI may be DCI with at least one of the lowest CCE index or the lowest aggregation level. For example, the UE may determine whether or not a plurality of DCI are to be transmitted based on a given field included in DCI with the lowest CCE index and the lowest aggregation level.

Further, when a plurality of DCI are transmitted, the given field may be included only in a specific DCI (for example, DCI with at least one of the lowest CCE index or the lowest aggregation level among received DCI). Alternatively, a plurality of DCI (for example, all DCI) may include the given field.

### <For Multiple Bits>

The base station may report information regarding the number of DCI to be detected by the UE by using a given field included in a given DCI corresponding to a given AL and a given CCE index. That is, the UE may assume that the number of DCI to be detected by the UE is reported by using a given field included in a given DCI corresponding to a given AL and a given CCE index.

For example, for at least one of a given control resource set or a given search space, the UE determines the number of DCI to be detected based on a bit value of a given field included in given DCI with at least one of the lowest AL or the lowest CCE index. As an example, DCI with the lowest CCE among DCI with the lowest AL may be the given DCI.

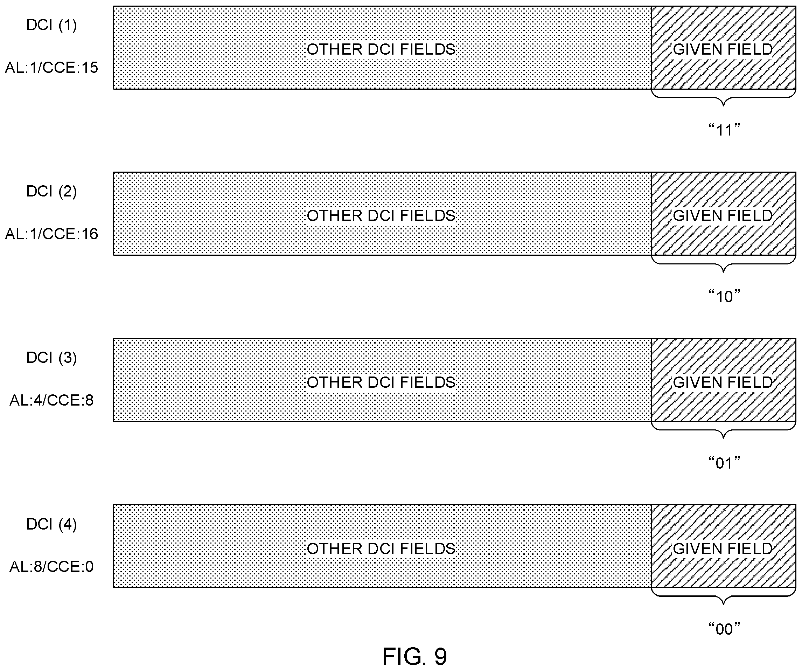

For example, a case where the UE detects the following four DCI is assumed (see Fig. 9).
DCI (1): AL 1 and CCE index 15, given bit field "11"
DCI (2): AL 1 and CCE index 16, given bit field "10"
DCI (3): AL 4 and CCE index 8, given bit field "01"
DCI (4): AL 8 and CCE index 0, given bit field "00"

Here, a case where the given DCI is DCI with the lowest CCE among DCI with the lowest AL is described as an example. In addition, here, it is assumed that, as bit values of the given field included in the DCI, "11" indicates 4, "10" indicates 3, "01" indicates 2, and "00" indicates 1. Note that in a case of indicating the number of DCI other than the corresponding DCI, "11" may indicate 3, "10" may indicate 2, "01" may indicate 1, and "00" may indicate 0.

Here, a case where the number of bits of the given bit field is two when four DCI are detected is described as an example. However, the number of DCI and the number of bits of the given bit field are not limited thereto.

In this case, the UE determines that the DCI (1) is the given DCI, and determines the total number (here, four) of DCI to be transmitted to the UE based on the given bit field "11" included in the DCI (1).

Here, the bit values of the given fields included in the respective DCI (1) to (4) are configured to be different from one another. For example, the given field of the given DCI (1) indicates the number of DCI to be actually transmitted, and the given field included in each of other DCI (2) to (4) indicates the number of DCI with a higher AL than that of the corresponding DCI (in a case of the same AL, DCI with a higher CCE index).

Therefore, when the bit value "00" of the given bit field of the DCI (4) with the highest AL is received, the UE may assume that DCI with a larger AL and CCE index than those of the DCI (4) is not transmitted. That is, when DCI (here, the DCI (4)) in which the bit value of the given field is "00" is received, the UE may perform a control so as not to detect DCI with a higher AL and CCE index than those of the corresponding DCI.

Further, for control resource sets in which the DCI (1) to (4) are configured, the UE may perform a control to perform decoding, starting from DCI with at least one of a lower AL or a lower CCE index. For example, the UE performs decoding, starting from a CCE with a lower index among CCEs with a lower AL. As a result, it is possible to decrease the number of times of decoding until DCI is detected (for example, until detection of all DCI is completed).

Further, the DCI (1) to (4) may be DCI transmitted in at least one of the same control resource set or the same search space. As a result, even when the CCE is configured for each control resource set, it is possible to suppress a case where the CCE indexes of the DCI (1) to (4) overlap.

Further, the base station may report information regarding the number of DCI to be detected by the UE by using a given field included in a given DCI corresponding to a given AL and a given CCE index, in at least one of a given control resource set and a given search space. The given control resource set (or search space) may be a control resource set (or search space) with the lowest index.

For example, for the control resource set (or search space) with the lowest index, the UE may determine the number of DCI to be detected based on a bit value of a given field of given DCI with at least one of the lowest AL or the lowest CCE index. As an example, DCI with the lowest CCE among DCI with the lowest AL may be the given DCI.

Further, for a given control resource set in which at least given DCI (for example, the DCI (1)) is configured, the UE may perform decoding, starting from DCI with at least one of a lower AL or a lower CCE index. For example, for a given control resource set, the UE performs decoding, starting from a CCE with a lower index among CCEs with a lower AL. As a result, it is possible to decrease the number of times of decoding until the DCI (1) is detected (or until detection of all DCI is completed).

Note that, in the above-described configuration, a case where the given DCI used to report the number of DCI to be actually transmitted is DCI with at least one of the lowest AL or the lowest CCE index, but the given DCI used to report the number of DCI is not limited thereto. For example, the given DCI used to report the number of DCI may be DCI (for example, the DCI (4)) with at least one of the highest AL or the highest CCE index.

In this case, the UE may determine the number of DCI to be detected based on a bit value of a given field included in given DCI with at least one of the highest AL or the highest CCE index (or the second highest AL or the second highest CCE index). As an example, DCI with the highest CCE among DCI with the highest AL may be the given DCI. Since DCI with a high AL can lower the error probability as compared with DCI with a low AL, it is possible to properly report information regarding the number of DCI to the UE by raising the AL of the given DCI used to report the number of DCI.

Further, the UE may perform a control to perform decoding, starting from DCI with at least one of a higher AL or a higher CCE index. For example, for a given control resource set, the UE performs decoding, starting from a CCE with a higher index among CCEs with a higher AL. As a result, it is possible to decrease the number of times of decoding until the DCI (4) is detected (or until detection of all DCI is completed). Note that the UE may perform decoding, starting from a CCE with a lower index among CCEs with a lower AL.

### (Sixth Aspect)

In a sixth aspect, at least one of the total number of DCI to be actually transmitted and a count value (or cumulative value) is reported to the UE by using DCI.

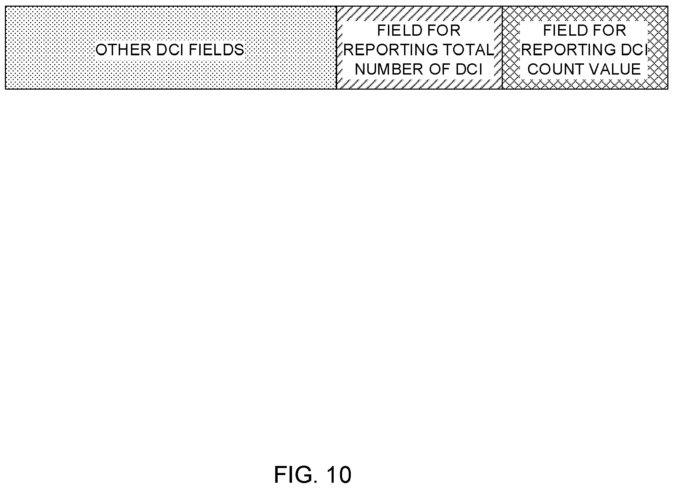

The base station reports at least one of information regarding the total number of DCI to be transmitted to a certain UE in a given duration (for example, slot), or information regarding a count value (also referred to as cumulative value) of the DCI to the UE, the information being included in each DCI (see Fig. 10). Fig. 10 illustrates an example of a DCI field including a field for reporting total number of DCI and a field for reporting a DCI count value.

The total number of DCI corresponds to, for example, the total number of DCI to be actually transmitted to the UE in a given duration. The base station may report the total number to the UE by using a given field of each DCI (which may also be referred to as a total DAI field, for example). Further, the total number included in each DCI may have the same value.

By reporting information regarding the total number to the UE, the information being included in each DCI, the UE can grasp the total number of DCI to be actually transmitted based on the received DCI even in a case where the UE has failed to detect some DCI.

The count value of DCI is used to, for example, count DCI to be actually transmitted to the UE in a given duration. The base station may report the count value of each DCI to the UE by using a given field of each DCI (which may also be referred to as a count DAI field, for example). The count value included in each DCI may be different. For example, the count value may be determined according to an index order of at least one of a PDCCH configuration, a control resource set, or a search space corresponding to each DCI.

By reporting information regarding the count value to the UE, the information being included in each DCI, the UE can grasp the count value of DCI that the UE has failed to detect even in a case where the UE has failed to detect some DCI.

Further, by including the total number of DCI and the count value of DCI, even in a case where the UE has failed to detect DCI with the last count value, the UE can properly grasp the total number of DCI.

The total number of DCI and the count value may be applied to each control resource set (or each search space). In this case, based on the number of DCI to be transmitted in each control resource set ID (or each search space ID), the total number and the count value may be configured for each control resource set ID (or each search space ID). In this case, the UE can grasp the number of DCI to be transmitted in each control resource set (or each search space) and control DCI reception processing.

Alternatively, the total number of DCI and the count value may be applied to all control resource sets (or all search spaces). In this case, the total number and the count value are configured based on the number of DCI to be transmitted in all control resource set IDs (or all search space IDs). In this case, the UE can control DCI reception processing by grasping the number of DCI to be transmitted in all control resource sets (or all search spaces), and thus the reception processing can be simplified.

### (Radio Communication System)

Now, the structure of a radio communication system according to the present embodiment will be described below. In this radio communication system, communication is performed using at least one combination of the plurality of aspects described above.

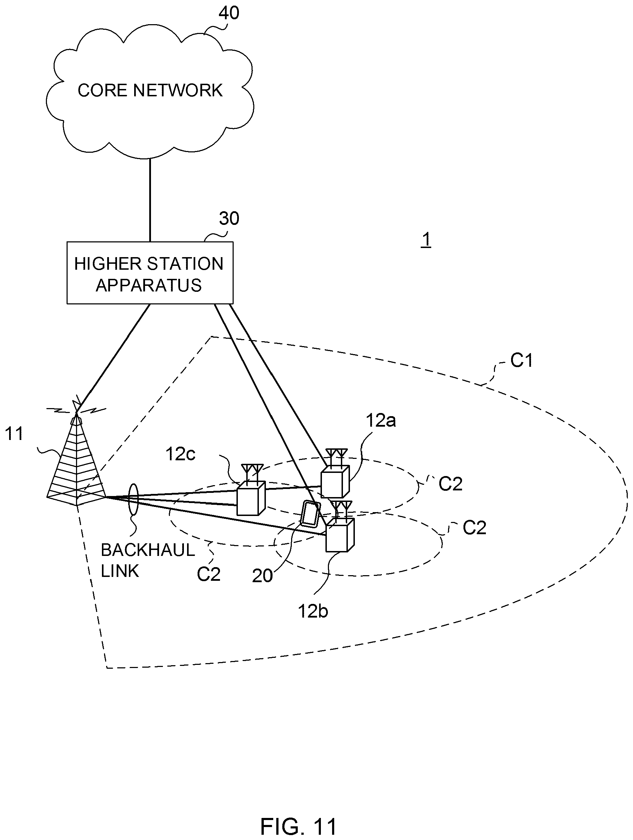

Fig. 11 is a diagram illustrating an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "Long Term Evolution (LTE)", "LTE-Advanced (LTE-A)", "LTE-Beyond (LTE-B)", "SUPER 3G", "IMT-Advanced", "4th generation mobile communication system (4G)", "5th generation mobile communication system (5G)", "New Radio (NR)", "Future Radio Access (FRA)", "New-Radio Access Technology (RAT)", and so on, or may be seen as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement, number and so on of cells and user terminals 20 are not limited to those illustrated in the drawings.

The user terminals 20 can connect with both the radio base station 11 and the radio base stations 12. The user terminals 20 may use the macro cell C1 and the small cells C2 simultaneously using CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as an "existing carrier", a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or a channel, and may indicate, for example, at least one of the subcarrier interval, the bandwidth, the symbol length, the cyclic prefix length, the subframe length, the TTI length, the number of symbols per TTI, the radio frame configuration, the filtering processing, the windowing processing, or the like.

The radio base station 11 and the radio base station 12 (or between two radio base stations 12) may be connected by wire (for example, means in compliance with the common public radio interface (CPRI) such as optical fiber, an X2 interface, and so on) or wirelessly.

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station", an "aggregate node", an "eNodeB (eNB)", a "transmission/reception point", and so on. Also, the radio base stations 12 are radio base stations having local coverages, and may be referred to as "small base stations", "micro base stations", "pico base stations", "femto base stations", "home eNodeBs (HeNBs)", "remote radio heads (RRHs)", "transmission/reception points", and so on. Hereinafter, the radio base stations 11 and 12 will be collectively referred to as "radio base stations 10", unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (physical downlink shared channel (PDSCH)), which is used by each user terminal 20 on a shared basis, a broadcast channel (physical broadcast channel (PBCH)), downlink L1/L2 control channels and so on are used as downlink channels. User data, higher layer control information and system information blocks (SIBs) are communicated in the PDSCH. Further, a master information block (MIB) is communicated in the PBCH.

The downlink L1/L2 control channels include at least one of a downlink control channel (physical downlink control channel (PDCCH) and/or an enhanced physical downlink control channel (EPDCCH), a physical control format indicator channel (PCFICH), or a physical hybrid-ARQ indicator channel (PHICH). Downlink control information (DCI), including PDSCH and/or PUSCH scheduling information, and so on, is communicated in the PDCCH.

Note that scheduling information may be reported via DCI. For example, the DCI to schedule reception of DL data may be referred to as "DL assignment", and the DCI to schedule transmission of UL data may be referred to as "UL grant".

The number of OFDM symbols to use for the PDCCH is communicated in the PCFICH. Hybrid automatic repeat request (HARQ) delivery acknowledgment information (also referred to as, for example, "retransmission control information", "HARQ-ACK", and "ACK/NACK") in response to the PUSCH is communicated in the PHICH. The EPDCCH is frequency-division-multiplexed with the PDSCH (downlink shared data channel) and used to communicate DCI and so on, like the PDCCH.

In the radio communication system 1, an uplink shared channel (physical uplink shared channel (PUSCH)), which is used by each user terminal 20 on a shared basis, an uplink control channel (physical uplink control channel (PUCCH)), a random access channel (physical random access channel (PRACH)) and so on are used as uplink channels. User data, higher layer control information, and so on are communicated in the PUSCH. Also, downlink radio link quality information (channel quality indicator (CQI)), delivery acknowledgement information, scheduling requests (SRs) and so on are communicated in the PUCCH. Random access preambles for establishing connections with cells are communicated in the PRACH.

In the radio communication systems 1, cell-specific reference signal (CRSs), channel state information reference signal (CSI-RSs), demodulation reference signal (DMRSs), positioning reference signal (PRSs) and so on are communicated as downlink reference signals. Also, in the radio communication system 1, measurement reference signals (sounding reference signals (SRSs)), demodulation reference signals (DMRSs), and so on are communicated as uplink reference signals. Note that, DMRSs may be referred to as "UE-specific reference signals". Also, the reference signals to be communicated are by no means limited to these.

### <Radio Base Station>

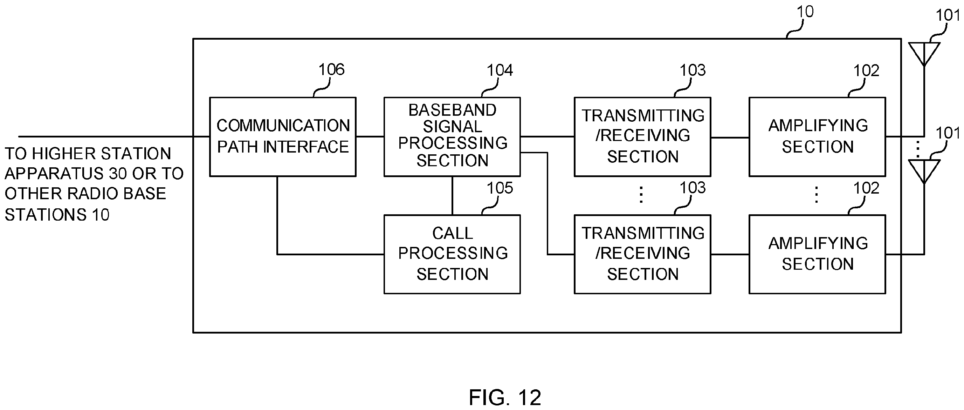

Fig. 12 is a diagram illustrating an example of an overall structure of the radio base station according to the present embodiment. A radio base station 10 has a plurality of transmitting/receiving antennas 101, amplifying sections 102, transmitting/receiving sections 103, a baseband signal processing section 104, a call processing section 105, and a communication path interface 106. Note that one or more transmitting/receiving antennas 101, amplifying sections 102, and transmitting/receiving sections 103 may be provided.

User data to be transmitted from the radio base station 10 to the user terminal 20 on the downlink is input from the higher station apparatus 30 to the baseband signal processing section 104, via the communication path interface 106.

In the baseband signal processing section 104, the user data is subjected to transmission processes, including a packet data convergence protocol (PDCP) layer process, division and coupling of the user data, radio link control (RLC) layer transmission processes such as RLC retransmission control, medium access control (MAC) retransmission control (for example, a hybrid automatic repeat request (HARQ) transmission process), scheduling, transport format selection, channel coding, an inverse fast Fourier transform (IFFT) process, a precoding process, and the like, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present disclosure pertains. Note that the transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signals through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing) for communication channels, manages the state of the radio base stations 10, and manages the radio resources.

The communication path interface 106 transmits and receives signals to and from the higher station apparatus 30 via a given interface. Also, the communication path interface 106 may transmit and receive signals (backhaul signaling) with other radio base stations 10 via an interbase station interface (for example, optical fiber or X2 interface in compliance with the common public radio interface (CPRI)).

Note that the transmitting/receiving section 103 may further include an analog beam forming section that performs analog beam forming. The analog beam forming section can be constituted by an analog beam forming circuit (for example, a phase shifter or a phase shift circuit) or an analog beam forming apparatus (for example, a phase shifter) described based on common understanding of the technical field to which the present invention pertains. Also, the transmitting/receiving antenna 101 can be constituted by an array antenna, for example. Also, the transmitting/receiving section 103 is configured such that that single BF and multi BF can be used.

The transmitting/receiving section 103 may transmit a signal using a transmission beam and may receive a signal using a reception beam. The transmitting/receiving section 103 may transmit and/or receive a signal using a given beam determined by the control section 301.

In addition, the transmitting/receiving section 103 transmits, to the user terminal 20, the downlink (DL) signal (including at least one of the DL data signal (downlink shared channel), the DL control signal (downlink control channel), or the DL reference signal), and receives, from the user terminal 20, the uplink (UL) signal (including at least one of the UL data signal, the UL control signal, or the UL reference signal).

Also, the transmitting/receiving section 103 transmits one or more downlink control information used for scheduling of downlink shared channels to be transmitted from a plurality of transmission points. The transmitting/receiving section 103 may transmit association information configured between at least one of a downlink control channel configuration, a search space configuration, or a control resource set configuration, and information related to the downlink shared channels. Further, the transmitting/receiving section 103 may transmit information regarding the maximum number of downlink control information to be transmitted from a plurality of transmission points.

Further, the transmitting/receiving section 103 may transmit information regarding the number of downlink control information to be transmitted in a given duration by using a given field of the downlink control information. Further, the transmitting/receiving section 103 may transmit at least one of information regarding the total number of downlink control information to be transmitted in a given duration or information regarding a count value of the downlink control information to be transmitted in a given duration by using the given field of the downlink control information.

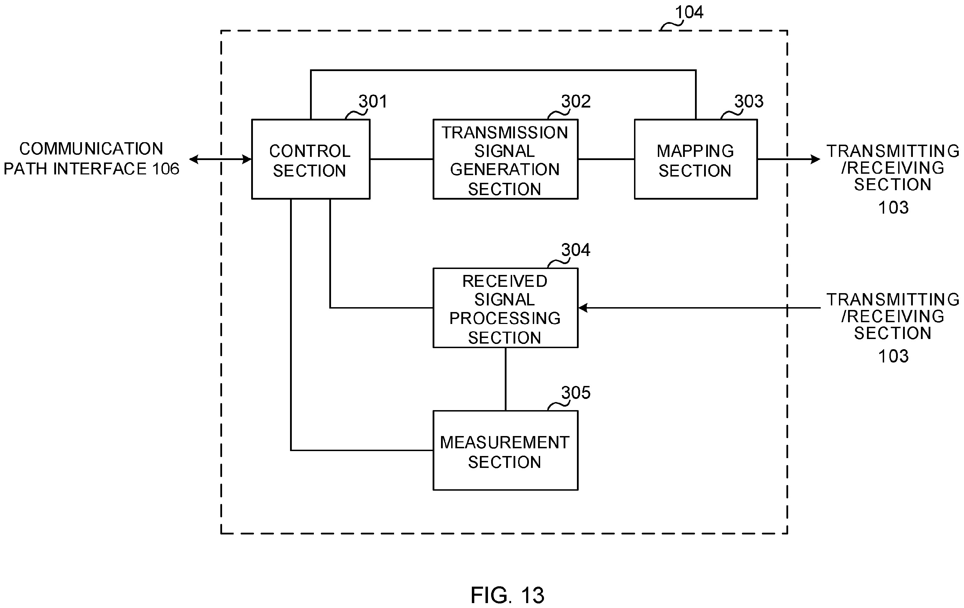

Fig. 13 is a diagram illustrating an example of a functional structure of the radio base station according to the present embodiment. Note that, although this example will primarily show functional blocks that pertain to characteristic parts of the present embodiment, it may be assumed that the radio base station 10 has other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these configurations have only to be included in the radio base station 10, and some or all of these configurations do not have to be included in the baseband signal processing section 104.

The control section (scheduler) 301 controls the whole of the radio base station 10. The control section 301 can be constituted by a controller, a control circuit, or a control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). Scheduling (e.g., resource allocation) of delivery confirmation information). The control section 301 controls the generation of downlink control signals, downlink data signals and so on, based on the results of determining whether or not retransmission control is necessary for uplink data signals, and so on.

The control section 301 controls transmission of DCI to be transmitted from a plurality of transmission points and PDSCH scheduling using the DCI.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit, or a signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Also, the downlink data signals are subjected to the coding process, the modulation process, and so on, by using coding rates and modulation schemes that are determined based on, for example, channel state information (CSI) reported from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit, or a mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals (uplink control signals, uplink data signals, uplink reference signals, etc.) that are transmitted from the user terminals 20. The received signal processing section 304 can be constituted by a signal processor, a signal processing circuit, or a signal processing apparatus that can be described based on general understanding of the technical field to which the present disclosure pertains.

The received signal processing section 304 outputs, to the control section 301, information decoded by the receiving processes. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit, or a measurement apparatus that can be described based on general understanding of the technical field to which the present disclosure pertains.

For example, the measurement section 305 may perform radio resource management (RRM) measurements, channel state information (CSI) measurements and so on, based on the received signals. The measurement section 305 may measure the received power (for example, reference signal received power (RSRP)), the received quality (for example, reference signal received quality (RSRQ), signal to interference plus noise ratio (SINR), signal to noise ratio (SNR), etc.), the signal strength (for example, received signal strength indicator (RSSI)), propagation path information (for example, CSI), and so on. The measurement results may be output to the control section 301.

### (User Terminal)

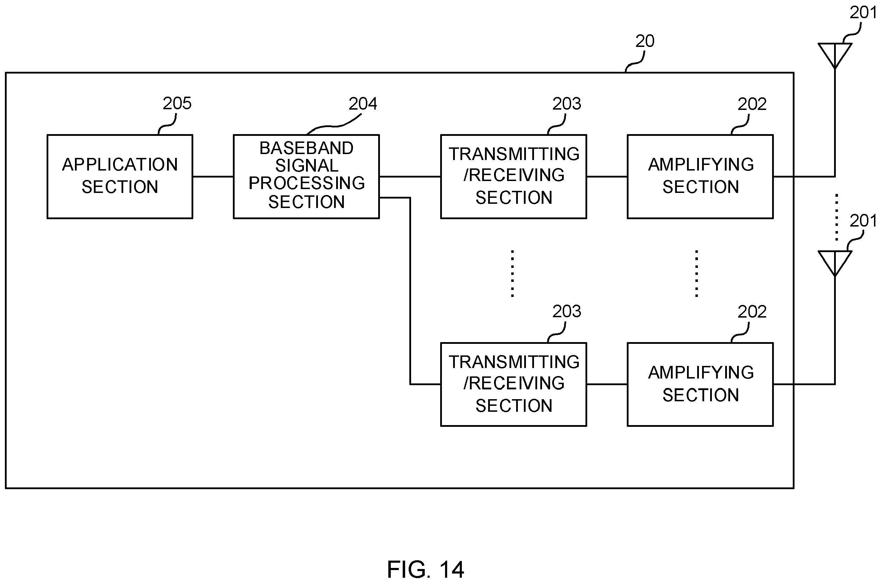

Fig. 14 is a diagram illustrating an example of an overall structure of a user terminal according to the present embodiment. The user terminal 20 includes a plurality of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving section 203 receives the downlink signal amplified in the amplifying section 202. The transmitting/receiving section 203 performs frequency conversion for the received signal into baseband signal, and outputs the baseband signal to the baseband signal processing section 204. The transmitting/receiving section 203 can be constituted by a transmitter/receiver, a transmitting/receiving circuit, or transmitting/receiving apparatus that can be described based on general understanding of the technical field to which the present disclosure pertains. Note that the transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, retransmission control, and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process, and so on, and the result is forwarded to the transmitting/receiving section 203.

Baseband signals that are output from the baseband signal processing section 204 are converted into a radio frequency band in the transmitting/receiving sections 203 and transmitted. The radio frequency signals subjected to frequency conversion in the transmitting/receiving sections 203 are amplified in the amplifying sections 202, and transmitted from the transmitting/receiving antennas 201.

Note that the transmitting/receiving section 203 may further include an analog beam forming section that performs analog beam forming. The analog beam forming section can be constituted by an analog beam forming circuit (for example, a phase shifter or a phase shift circuit) or an analog beam forming apparatus (for example, a phase shifter) described based on common understanding of the technical field to which the present invention pertains. Also, the transmitting/receiving antenna 201 can be constituted by an array antenna, for example. Also, the transmitting/receiving section 203 is configured such that that single BF and multi BF can be used.

The transmitting/receiving section 203 may transmit a signal using a transmission beam and may receive a signal using a reception beam. The transmitting/receiving section 203 may transmit and/or receive a signal using a given beam determined by the control section 401.

Further, the transmitting/receiving section 203 receives a downlink (DL) signal (including at least one of the DL data signal (downlink shared channel), the DL control signal (downlink control channel), or the DL reference signal) from the radio base station 10, and transmits an uplink (UL) signal (including at least one of the UL data signal, the UL control signal, or the UL reference signal) to the radio base station 10.

Also, the transmitting/receiving section 203 receives one or more downlink control information used for scheduling of downlink shared channels to be transmitted from a plurality of transmission points. The transmitting/receiving section 203 may receive association information configured between at least one of a downlink control channel configuration, a search space configuration, or a control resource set configuration, and information related to the downlink shared channels. Further, the transmitting/receiving section 203 may receive information regarding the maximum number of downlink control information to be transmitted from a plurality of transmission points.

Further, the transmitting/receiving section 203 may receive at least one of information regarding the number of downlink control information to be transmitted in a given duration, or information related to the downlink shared channel corresponding to the downlink control information transmitted in the given duration.

Further, the transmitting/receiving section 203 may receive information regarding the number of downlink control information to be transmitted in a given duration by using a given field of the downlink control information. Further, the transmitting/receiving section 203 may receive at least one of information regarding the total number of downlink control information to be transmitted in a given duration or information regarding a count value of the downlink control information to be transmitted in a given duration by using the given field of the downlink control information.

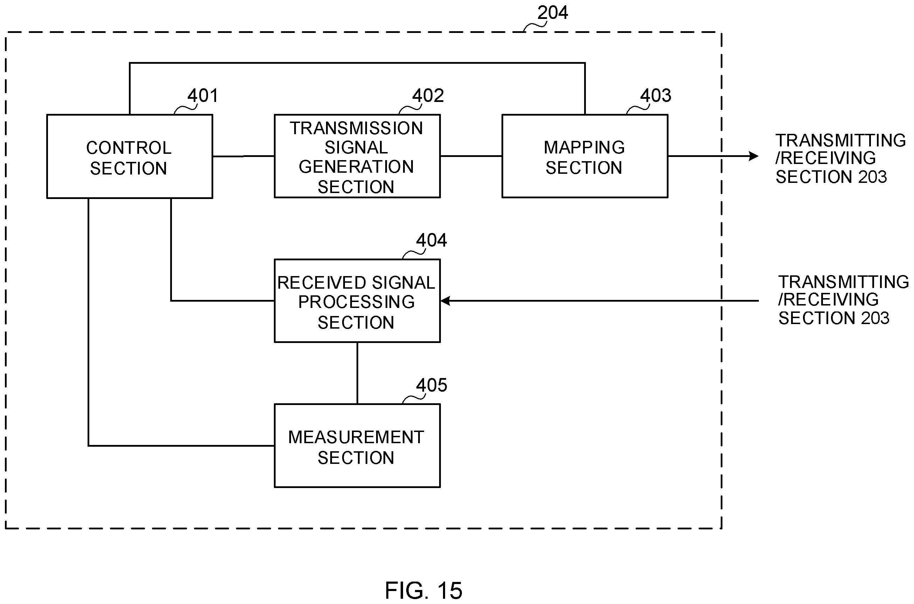

Fig. 15 is a diagram illustrating an example of a functional structure of the user terminal according to the present embodiment. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least includes a control section 401, a transmission signal generation section 402, a mapping section 403, a received signal processing section 404, and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit, or a control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of determining whether or not retransmission control is necessary for the downlink control signals and/or downlink data signals, and so on.

The control section 401 controls monitoring of a downlink control channel (or downlink control information) based on association information configured between at least one of a downlink control channel configuration, a search space configuration, or a control resource set configuration, information related to the downlink shared channels.

Also, the control section 401 may determine the maximum number of downlink control information to be transmitted from a plurality of transmission points, based on the information reported from the base station or a given value. Further, in a case where a plurality of downlink control information are received, the control section 401 may determine that aggregation levels of the plurality of downlink control information are the same. Further, when performing communication with a plurality of transmission points, the control section 401 may determine a given transmission point for which downlink control channel monitoring is to be performed based on the information reported from the base station. Further, the control section 401 may control reception of at least one of information regarding the number of downlink control information to be transmitted in a given duration, or information related to a downlink shared channel corresponding to the downlink control information transmitted in the given duration.

Further, the control section 401 may determine the number of downlink control information to be transmitted in a given duration, based on information included in the received downlink control information. Further, the control section 401 may determine the number of downlink control information to be transmitted in a given duration, based on a given field included in downlink control information corresponding to at least one of a given control channel element or a given aggregation level. Note that information included in the given field of each downlink control information may be different.

Further, the control section 401 may stop detection of downlink control information when a value of the given field included in the received downlink control information is the given value. Further, the control section 401 may determine the number of downlink control information to be transmitted in a given duration, based on a given field included in downlink control information transmitted by applying at least one of a given control resource set or a given search space index.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or a signal generation apparatus that can be described based on general understanding of the technical field to which the present disclosure pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving section 203. The mapping section 403 can be constituted by a mapper, a mapping circuit, or a mapping apparatus that can be described based on general understanding of the technical field to which the present disclosure pertains.

The received signal processing section 404 performs receiving processes (for example, demapping, demodulation, decoding, and so on) of received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit, or a signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processes to the control section 401. The received signal processing section 404 outputs, for example, broadcast information, system information, RRC signaling, DCI, and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit, or a measurement apparatus that can be described based on general understanding of the technical field to which the present disclosure pertains.

For example, the measurement section 405 may perform RRM measurements, CSI measurements, and so on based on the received signals. The measurement section 405 may measure the received power (for example, RSRP), the received quality (for example, RSRQ, SINR, SNR, etc.), the signal strength (for example, RSSI), propagation path information (for example, CSI), and so on. The measurement results may be output to the control section 401.

### (Hardware Structure)

Note that the block diagram that has been used to describe the present embodiment illustrates blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

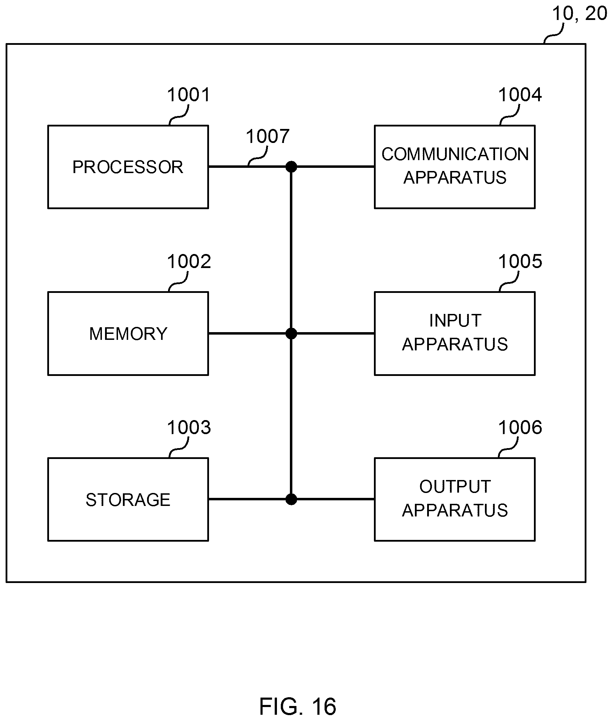

For example, the radio base station, user terminals, and so on according to the present embodiment may function as a computer that executes the process of each aspect of the present embodiment. Fig. 16 is a diagram illustrating an example of a hardware structure of the radio base station and the user terminal according to the present embodiment. Physically, the above-described radio base stations 10 and user terminals 20 may be formed as a computer apparatus that includes a processor 1001, a memory 1002, a storage 1003, a communication apparatus 1004, an input apparatus 1005, an output apparatus 1006, a bus 1007, and the like.

Note that, in the following description, the word "apparatus" can be replaced by "circuit", "device", "unit", and so on. Note that the hardware structure of the radio base station 10 and the user terminal 20 may be configured to include one or more of each apparatus illustrated in the drawing, or may be configured not to include some apparatuses.

For example, although only one processor 1001 is illustrated, a plurality of processors may be provided. Furthermore, processes may be implemented on one processor, or processes may be implemented simultaneously, in sequence, or in different manners, on one or more processors. Note that the processor 1001 may be implemented with one or more chips.

Each function of the radio base station 10 and the user terminal 20 is implemented by loading given software (program) on hardware such as the processor 1001 and the memory 1002 such that the processor 1001 performs operation to control the communication in the communication apparatus 1004, or the reading and/or writing of data in the memory 1002 and the storage 1003.

The processor 1001 may control the whole computer by, for example, running an operating system. The processor 1001 may be configured with a central processing unit (CPU), which includes interfaces with peripheral equipment, a control apparatus, a computing apparatus, a register, and so on. For example, the above-described baseband signal processing section 104 (204), the call processing section 105 and so on may be implemented by the processor 1001.

Furthermore, the processor 1001 reads programs (program codes), software modules, or data from the storage 1003 and/or the communication apparatus 1004 into the memory 1002, and executes various processes according to these. As for the programs, programs to allow the computer to execute at least some of the operations described in the present embodiment described above may be used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a read only memory (ROM), an erasable programmable ROM (EPROM), an electrically EPROM (EEPROM), a random access memory (RAM) or other appropriate storage media. The memory 1002 may be referred to as a "register", a "cache", a "main memory (primary storage apparatus)", and so on. The memory 1002 can store executable programs (program codes), software modules, and/or the like for implementing the radio communication method according to the present embodiment.

The storage 1003 is a computer-readable recording medium, and may be constituted by, for example, at least one of a flexible disk, a floppy (registered trademark) disk, a magneto-optical disk (for example, a compact disc (compact disc ROM (CD-ROM) and so on), a digital versatile disc, or a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for allowing inter-computer communication by using wired and/or wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to implement, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device for receiving input from the outside (for example, a keyboard, a mouse, a microphone, a switch, a button, a sensor, and so on). The output apparatus 1006 is an output device for allowing output to the outside (for example, a display, a speaker, a light emitting diode (LED) lamp, and so on). Note that the input apparatus 1005 and the output apparatus 1006 may be provided in an integrated structure (for example, a touch panel).

Furthermore, these pieces of apparatus, including the processor 1001, the memory 1002, and so on are connected by the bus 1007 so as to communicate information. The bus 1007 may be configured with a single bus, or may be configured with buses that vary between pieces of apparatus.

Also, the radio base station 10 and the user terminal 20 may be structured to include hardware such as a microprocessor, a digital signal processor (DSP), an application-specific integrated circuit (ASIC), a programmable logic device (PLD), a field programmable gate array (FPGA), and so on, and some or all of the functional blocks may be implemented by the hardware. For example, the processor 1001 may be implemented with at least one of these pieces of hardware.

### (Variations)

Note that the terminology used in the present specification and the terminology that is needed to understand the present specification may be replaced by other terms that convey the same or similar meanings. For example, "channels" and/or "symbols" may be replaced by "signals" (or "signaling"). Also, "signals" may be "messages". A reference signal may be abbreviated as an RS, and may be referred to as a pilot, a pilot signal, and so on, depending on which standard applies. Furthermore, a "component carrier (CC)" may be referred to as a "cell", a "frequency carrier", a "carrier frequency", and so on.

Furthermore, a radio frame may be constituted by one or more periods (frames) in the time domain. Each of one or more periods (frames) constituting a radio frame may be referred to as a "subframe". Furthermore, a subframe may be constituted by one or multiple slots in the time domain. A subframe may be a fixed time duration (for example, 1 ms) that is not dependent on the numerology.

Furthermore, a slot may be constituted by one or more symbols in the time domain (orthogonal frequency division multiplexing (OFDM) symbols, single carrier frequency division multiple access (SC-FDMA) symbols, and so on). Also, a slot may be a time unit based on the numerology. Also, a slot may include a plurality of mini slots. Each mini slot may be constituted by one or more symbols in the time domain. Also, a mini slot may be referred to as a "subslot".

A radio frame, a subframe, a slot, a mini slot, and a symbol all represent the time unit in signal communication. A radio frame, a subframe, a slot, a mini slot, and a symbol may be each called by other applicable names. For example, one subframe may be referred to as a "transmission time interval (TTI)", a plurality of consecutive subframes may be referred to as a "TTI", or one slot or one mini slot may be referred to as a "TTI". That is, a subframe and/or a TTI may be the existing subframe (1 ms) in the LTE, may be a shorter duration than 1 ms (for example, one to thirteen symbols), or may be a longer duration than 1 ms. Note that the unit to represent the TTI may be referred to as a "slot", a "mini slot" and so on, instead of a "subframe".

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited thereto.

The TTI may be the transmission time unit of channel-coded data packets (transport blocks), code blocks, and/or codewords, or may be the unit of processing in scheduling, link adaptation, and so on. Note that, when a TTI is given, the period of time (for example, the number of symbols) in which transport blocks, code blocks, and/or codewords are actually mapped may be shorter than the TTI.

Note that, when one slot or one mini slot is referred to as a "TTI", one or more TTIs (that is, one or more slots or one or more mini slots) may be the minimum time unit of scheduling. Also, the number of slots (the number of mini slots) which constitute this minimum time unit of scheduling may be controlled.

A TTI having a time duration of 1 ms may be referred to as a "usual TTI (TTI in LTE Rel. 8 to 12)", a "normal TTI", a "long TTI", a "usual subframe", a "normal subframe", a "long subframe", and so on. A TTI that is shorter than a usual TTI may be referred to as a "shortened TTI", a "short TTI", "a partial TTI (or a "fractional TTI"), a "shortened subframe", a "short subframe", a "mini slot", "a sub-slot", and so on.

Note that a long TTI (for example, a usual TTI, a subframe, etc.) may be replaced with a TTI having a time duration exceeding 1 ms, and a short TTI (for example, a shortened TTI, etc.) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one mini slot, one subframe, or one TTI in length. One TTI and one subframe may be each constituted by one or more resource blocks. Note that one or more RBs may be referred to as a "physical resource block (physical RB (PRB))", a "subcarrier group (SCG)", a "resource element group (REG)", a "PRB pair", an "RB pair", and so on.

Furthermore, a resource block may be constituted by one or more resource elements (REs). For example, one RE may be a radio resource field of one subcarrier and one symbol.

Note that the structures of radio frames, subframes, slots, mini slots, symbols, and so on described above are merely examples. For example, configurations pertaining to the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the cyclic prefix (CP) length, and so on can be variously changed.

Also, the information, parameters, and the like described in the present specification may be represented in absolute values or in relative values with respect to given values, or may be represented using other applicable information. For example, a radio resource may be specified by a given index.

The names used for parameters and so on in the present specification are in no respect limiting. For example, since various channels (physical uplink control channel (PUCCH), physical downlink control channel (PDCCH) and so on) and information elements can be identified by various suitable names, the various names assigned to these individual channels and information elements are in no respect limiting.

The information, signals, and the like described in the present specification may be represented by using a variety of different technologies. For example, data, instructions, commands, information, signals, bits, symbols, and chips, all of which can be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals and so on may be input and output via a plurality of network nodes.

The information, signals, and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals, and so on that are input may be transmitted to other pieces of apparatus.

Reporting of information is not limited to the aspects/embodiments described in the present specification, but other methods may be used as well. For example, reporting of information may be implemented by using physical layer signaling (for example, downlink control information (DCI), uplink control information (UCI), higher layer signaling (for example, radio resource control (RRC) signaling, broadcast information (master information block (MIB), system information block (SIB), and so on), medium access control (MAC) signaling, and so on), other signals, and/or combinations of these.

Note that physical layer signaling may be referred to as "L1/L2 (Layer 1/Layer 2) control information (L1/L2 control signals)", "L1 control information (L1 control signal)", and so on. Also, RRC signaling may be referred to as RRC messages, and may be, for example, an RRC connection setup message, an RRC connection reconfiguration message, and so on. Also, MAC signaling may be reported using, for example, MAC control elements (MAC CEs).

Also, reporting of given information (for example, reporting of information to the effect that "X holds") does not necessarily have to be sent explicitly, and can be sent implicitly (for example, by not reporting this piece of information or by reporting another piece of information).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, instructions, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used herein are used interchangeably.

As used herein, the terms "base station (BS)", "radio base station", "eNB", "gNB", "cell", "sector", "cell group", "carrier", and "component carrier" may be used interchangeably. A base station may be referred to as a "fixed station", "NodeB", "eNodeB (eNB)", "access point", "transmission point", "reception point", "femto cell", "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (remote radio heads (RRHs))). The term "cell" or "sector" refers to part or the entirety of the coverage area of a base station and/or a base station subsystem that provides communication services within this coverage.

As used herein, the terms "mobile station (MS)", "user terminal", "user equipment (UE)", and "terminal" may be used interchangeably.

A mobile station may be referred to, by a person skilled in the art, as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other suitable terms.

Furthermore, the radio base stations in the present specification may be interpreted as user terminals. For example, each aspect/embodiment of the present disclosure may be applied to a configuration in which communication between a radio base station and a user terminal is replaced by communication among a plurality of user terminals (device-to-device (D2D)). In this case, the user terminal 20 may have the functions of the radio base station 10 described above. In addition, terms such as "uplink" and "downlink" may be interpreted as "side". For example, an uplink channel may be interpreted as a side channel.

Likewise, the user terminals in the present specification may be interpreted as radio base stations. In this case, the radio base station 10 may have the functions of the user terminal 20 described above.

Certain operations which have been described in the present specification to be performed by base stations may, in some cases, be performed by their upper nodes. In a network including one or more network nodes with base stations, it is clear that various operations that are performed so as to communicate with terminals can be performed by base stations, one or more network nodes (for example, mobility management entities (MMEs), serving-gateways (S-GWs), and so on may be possible, but these are not limiting) other than base stations, or combinations of these.

The aspects/embodiments illustrated in the present specification may be used individually or in combinations, or they may be switched depending on the mode of implementation. The order of processes, sequences, flowcharts, and so on that have been used to describe the aspects/embodiments herein may be re-ordered as long as inconsistencies do not arise. For example, although various methods have been illustrated in the present specification with various components of steps in exemplary orders, the specific orders that are illustrated herein are by no means limiting.

The aspects/embodiments illustrated in the present specification may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems that are enhanced based on these.

The phrase "based on" as used in the present specification does not mean "based only on", unless otherwise specified. In other words, the phrase "based on" means both "based only on" and "based at least on".

Reference to elements with designations such as "first", "second" and so on as used herein does not generally limit the number/quantity or order of these elements. These designations can be used herein only for convenience, as a method for distinguishing between two or more elements. In this way, reference to the first and second elements does not imply that only two elements may be employed, or that the first element must precede the second element in some way.

The term "determining" as used herein may encompass a wide variety of operations. For example, "determining" as used herein may be interpreted to mean making "determinations" related to calculating, computing, processing, deriving, investigating, looking up (for example, searching a table, a database, or some other data structure), ascertaining, and so on. Furthermore, "determining" as used herein may be interpreted to mean making "determinations" related to receiving (for example, receiving information), transmitting (for example, transmitting information), inputting, outputting, accessing (for example, accessing data in memory), and the like. In addition, "determining" as used herein may be interpreted to mean making "determinations" related to resolving, selecting, choosing, establishing, comparing, and the like. In other words, "determining" as used herein may be interpreted to mean making "determinations" related to some operations.

As used herein, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access".

As used herein, when two elements are connected, these elements may be considered "connected" or "coupled" to each other by using one or more electrical wires, cables, and/or printed electrical connections, and, as a number of non-limiting and non-inclusive examples, by using electromagnetic energy, such as electromagnetic energy having wavelengths in the radio frequency, microwave and optical (both visible and invisible) regions.

In the present specification, the phrase "A and B are different" may mean "A and B are different from each other". The terms such as "leave" and "coupled" may be interpreted in a similar manner.

When terms such as "include", "comprise", and variations of these are used in the present specification or in claims, these terms are intended to be inclusive, in a manner similar to the way the term "provide" is used. Furthermore, the term "or" as used in the present specification or in claims is intended not to be an exclusive disjunction.

Although the present invention has been described above in detail, it should be obvious to a person skilled in the art that the present invention is not limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a receiving section that receives one or more downlink control information used for scheduling of downlink shared channels to be transmitted from a plurality of transmission points by monitoring a downlink control channel; and
a control section that determines the number of downlink control information to be transmitted in a given duration based on information included in the received downlink control information.

2. The user terminal according to claim 1, wherein the control section determines the number of downlink control information to be transmitted in the given duration, based on a given field included in downlink control information corresponding to at least one of a given control channel element or a given aggregation level.

3. The user terminal according to claim 2, wherein information included in the given field of each downlink control information is different.

4. The user terminal according to claim 2 or 3, wherein the control section stops downlink control information detection when a value of the given field included in the received downlink control information is a given value.

5. The user terminal according to any one of claims 2 to 4, wherein the control section determines the number of downlink control information to be transmitted in the given duration, based on a given field included in downlink control information transmitted by applying at least one of a given control resource set or a given search space index.

6. The user terminal according to claim 1, wherein the downlink control information includes at least one of information regarding the total number of downlink control information to be transmitted in the given duration or information regarding a count value of downlink control information to be transmitted in the given duration.
